Europäisches Patentamt

European Patent Office

Office européen des brevets

(11) Veröffentlichungsnummer: **0 398 868**

**A1**

## (12) EUROPÄISCHE PATENTANMELDUNG

(21) Anmeldenummer: **90890156.4**

(51) Int. Cl.5: **A01G 9/24**

(22) Anmeldetag: **17.05.90**

(30) Priorität: **19.05.89 AT 1217/89**

(43) Veröffentlichungstag der Anmeldung:
**22.11.90 Patentblatt 90/47**

(84) Benannte Vertragsstaaten:
**AT BE DE DK NL**

(71) Anmelder: **VOEST-ALPINE STAHL LINZ
Gesellschaft m.b.H.
Turmstrasse 45
A-4020 Linz(AT)**

(72) Erfinder: **Hanke, Reinhart, Dipl.-Ing.
Annabergstrasse 2**

**A-8700 Leoben(AT)**
Erfinder: **Zuder, Gerald, Dipl.-Ing., Dr. techn.
Salzlände 13
A-8700 Leoben(AT)**
Erfinder: **Klinar, Gottfried
Alpenstrasse 33
A-8700 Leoben(AT)**

(74) Vertreter: **Haffner, Thomas M., Dr. et al
Patentanwaltskanzlei Dipl.-Ing. Adolf
Kretschmer Dr. Thomas M. Haffner
Schottengasse 3a
A-1014 Wien(AT)**

(54) **Einrichtung zum Kultivieren von Pflanzen.**

(57) Bei einer Einrichtung zum Kultivieren von Pflanzen (1), wird ein Gasverteilungsraum (9) vorgesehen, an welchem wenigstens eine Leitung für befeuchtete Zuluft mit definierter, bedarfsgerechter Zusammensetzung angeschlossen ist. Das Pflanzsubstrat (3) ist zumindest an seiner Unterseite an den Gasverteilungsraum (9) angeschlossen.

FIG. 1

Die Erfindung bezieht sich auf eine Einrichtung zum Kultivieren von Pflanzen mit einem Gasverteilungsraum, an welchen wenigstens eine Leitung für, insbesondere befeuchtete, Zuluft angeschlossen ist.

Konventionelle Kultiviereinrichtungen, wie sie beispielsweise in Glashäusern Verwendung finden, umfassen beispielsweise Tassen für die konventionelle Tischkultur, wobei die Bewässerung der Pflanzen als Tropfbewässerung oder über in die Tassen geleitetes Wasser von unten erfolgt. Es ist weiters bekannt, eine Mehrzahl von Topfpflanzen über Regnersysteme zu bewässern, wobei beispielsweise über die Länge eines Regnerrohres in einem den Topfabständen entsprechenden Abstand Sprühdüsen vorgesehen sind. Je nach Verschmutzungsgrad des Wassers kann es hiebei früher oder später zu Verstopfungen im Bereich der Düsen kommen und darüberhinaus ist die Bewässerungsleistung auf Grund des über die Länge des Rohres auftretenden Druckabfalles in hohem Maße vom Zuführungsdruck des Wassers abhängig, so daß eine gleichmäßige Bewässerung nicht ohne weiteres gewährleistet werden kann. Im übrigen führt das Besprühen von Pflanzen von oben häufig auch zu einem unerwünschten Besprühen der Blätter oder Blüten der Pflanzen und kann hiebei zu Kalkablagerungen an den Blättern oder Blüten führen.

Im Fall von Topfkulturen bzw. Glashauskulturen lassen sich Dünger- bzw. Nährstoffzusätze nur entweder über das Gießwasser oder beim Umtopfen in das Substrat einbringen. Analoges gilt für andere Hilfsstoffe, welche durch Besprühen bzw. mit dem Gießwasser aufgebracht werden können. Die Heizung erfolgt in der Regel über die Glashausatmosphäre, womit ein großes Volumen an Luft erwärmt werden muß und hohe Wärmeverluste an den Wänden und den Dachflächen des Glashauses auftreten. Es wurde auch bereits vorgeschlagen wachstumsfördernde gasförmige Zusätze, insbesondere eine $CO_2$-Anreicherung der Glashausluft vorzunehmen, wobei allerdings höchste Ansprüche an die Reinheit der Atmosphäre gestellt werden und auch hier zur Erzielung der erforderlichen biologischen Wirksamkeit wesentlich größere Mengen an wachstumsfördernden Substanzen eingesetzt werden müssen.

Die Erfindung zielt nun darauf ab, eine Einrichtung der eingangs genannten Art zu schaffen, mit welcher mit einfachen Mitteln eine gleichmäßige und homogene Befeuchtung sowie eine ökonomische Einbringung von das Pflanzenwachstum fördernden Stoffen gelingt und mit welcher eine das Wachstum förderliche Temperatur bei geringstem Energieaufwand und gleichzeitig verringerten Verlusten gezielt zur Wirkung gebracht werden.

Zur Lösung dieser Aufgabe besteht die erfindungsgemäße Einrichtung im wesentlichen darin, daß das Pflanzsubstrat zumindest an seiner Unterseite an den Gasverteilungsraum angeschlossen ist. Da ein Gasverteilungsraum vorgesehen ist, an welchen wenigstens eine Leitung für insbesondere befeuchtete zuluft angeschlossen ist, und das Pflanzsubstrat zumindest an seiner Unterseite an den Gasverteilungsraum angeschlossen ist, ist es mit einfachen Mitteln möglich, unmittelbar temperierte Gase mit dem gewünschten Feuchtigkeitsgehalt zur Optimierung der Wachstumsbedingungen für die jeweiligen Pflanzen zu verwenden und diesen zuzuführen, wobei insbesondere bei Verwendung von befeuchteter Zuluft regionale Überfeuchtungen und damit die Gefahr von Wurzelfäulnis verhindert werden kann. Durch die durch das Pflanzsubstrat hindurchgeleitete, entsprechend temperierte Luft wird eine homogene Temperaturverteilung und damit ein optimales Wachstumsklima eingestellt und dadurch, daß die Zuluft während des Durchtrittes durch das Pflanzsubstrat ihre Feuchtigkeit verliert, wird eine gleichmäßige Befeuchtung bei gleichzeitiger Sicherstellung der gewünschten Bodendurchlüftung erzielt. Insgesamt werden im Falle von Nutz pflanzen hiebei überflüssige Seitentriebe und Wurzeltriebe vermieden, und es werden rascher größere Knollen bzw. Früchte erzielt und es wird gleichzeitig sichergestellt, daß der oberirdische Teil der Pflanze an der für die Aufnahme von Feuchtigkeit besonders günstigen Stelle, nämlich seiner Unterseite, mit dem gewünschten Mindestmaß an feuchter Luft versorgt werden kann. Insgesamt kann mit einer derartigen Einrichtung, bei welcher die befeuchtete Zuluft das Pflanzsubstrat durchströmt, ein rascheres Wachstum bei gleichzeitig günstigerer Ausbildung der Pflanzen erzielt werden.

Die Kultivierung unter Begasung des Wurzelraumes der Pflanze erlaubt es, eine Reihe von für die optimale Kultivierung vorteilhaften Möglichkeiten optimal zu nützen. Über den Gasstrom wird permanent die Möglichkeit der Zufuhr von Haupt- und Spurennährstoffen, von wachstumsregelnden Hilfsstoffen, von Schutzstoffen, wie Bioziden, ermöglicht, wobei diese Zufuhr über die Gasphase bzw. als Aerosol in feindisperser Phase erfolgen kann, wobei die Fixierung im Substrat über die Filterwirkung des Substrates erreicht wird. Da die in der Gasphase gelösten oder suspendierten Teilchen nahezu quantitativ vom Substrat aufgenommen werden, wird die Glashausatmosphäre selbst von derartigen Hilfsstoffen freigehalten und es können wesentlich geringere Mengen wirksam eingesetzt werden. Die Bewässerung über die Gasphase ist gleichfalls permanent möglich, wobei die Verfügbarkeit des Wassers für die Pflanze durch Kondensationsvorgänge im Inneren des Substrates gegeben ist und eine einfache Steuerung und Anpassung an den jeweiligen Wasserbedarf erfolgen kann. Auch die Heizung durch Zufuhr von warmen Gasen zeichnet sich durch einen wesentlich höheren Wirkungsgrad der Energieübertragung aus, wobei Wärmeverluste durch Konvektion an den Glashauswänden weitgehend vermieden werden. Zum Unterschied von der Erwärmung der Glashausluft selbst fallen Verluste, wie sie bei der Wärmeübertragung auf die Atmosphäre des Glashauses auftreten, weg und es besteht eine bessere Möglichkeit der Kontrolle der Temperatur in physiologisch wichtigen Bereichen der Pflanzen, nämlich den Wurzelraum und den Blattunterseiten. Gleichzeitig wird eine besonders wirkungsvolle $CO_2$-Zufuhr möglich und insbesondere die Möglichkeit geschaffen, den $CO_2$-Gehalt im Wurzelraum zu kontrollieren, wobei die Möglichkeit geboten wird, $CO_2$ auch aus Abluft und Abgasen für die Kontrolle des $CO_2$-Gehaltes im Wurzelraum heranzuziehen. Die Einleitung von Rauchgas in die Glashausatmosphäre wäre demgegenüber nicht ohne weiteres möglich. Hiebei kann das Substrat als Biofilter wirksam werden und es besteht dennoch die Möglichkeit die Glashausatmosphäre, beispielsweise durch entsprechendes Lüften in arbeitshygienischer Hinsicht einwandfrei zu halten, obwohl höhere $CO_2$-Konzentrationen eingesetzt werden können. Die Anreicherung an $CO_2$ kann hiebei ohne weiteres das Zehnfache der Anreicherung betragen, wie sie üblicherweise in der Glashausatmosphäre als zulässig angesehen wird. Vor allen Dingen ein empirisch festgestellter Effekt, daß durch die Begasung der Pflanzen von unten, also durch das Substrat zusätzlich eine Simulierung von Wachstum und Entwicklung, z.B. Blühreife, erreicht wird, kommt bei der erfindungsgemäßen Einrichtung zum Kultivieren voll zum Tragen. Die freie Wählbarkeit einer definierten Gaszusammensetzung kann hinsichtlich Pflanzenart und Pflanzenalter produktionsbezogen optimiert werden und es können Pflanzen in bestimmten Entwicklungsstadien präzise beeinflußt werden. Eine derartige Differenzierung der Pflanzenversorgung über die Topfbegasung nach Art und Entwicklungsstadion über das in den Gasverteilungsraum eingebrachte befeuchtete Gas läßt sich über ein entsprechendes Verteilersystem auch für unterschiedliche Pflanzen im gleichen Glashaus unterschiedlich gestalten. Auch eine zyklische bzw. intermittierende Beatmung in der jeweiligen Pflanzenart, dem Substrat und dem Pflanzenalter angepaßten Intervallen läßt sich über einfache Programmsteuerungen verwirklichen. Insbesondere der Tag- und Nachtrythmus kann in einfacher Weise einer Regelung unterworfen werden und es können im Tag- und Nachtrythmus beispielsweise Temperaturänderungen kurzfristig vorgenommen werden, welche innerhalb kürzester Zeit zur Wirkung gelangen. Ähnlich kurzfristig kommen Änderungen von Feuchtigkeit oder Konzentrationen der Hilfsstoffe, des $CO_2$ od.dgl. zur Wirkung.

All die vorgenannten Vorteile führen insgesamt zu einer wirtschaftlicheren Nutzung von Glashäusern und einer auffällig erhöhten Pflanzenqualität.

Mit Vorteil ist die erfindungsgemäße Ausbildung hiebei so getroffen, daß das Pflanzsubstrat in Töpfen, Containern oder Kompartimenten, wie z.B. Ballen, enthalten ist, deren Böden sowie gegebenenfalls Teile der Topfwände gasdurchlässig ausgebildet sind und an den Gasverteilungsraum angeschlossen sind, und daß zumindest die Oberkanten der Pflanzentöpfe bzw. Kompartimente dichtend miteinander verbunden sind. Der dichtende Abschluß der Oberkanten der Pflanzentöpfe relativ zueinander stellt hiebei sicher, daß die gesamte eingetragene befeuchtete Zuluft durch das Substrat hindurchströmen muß und nicht an den Töpfen bzw. Containern vorbeiströmen kann, wodurch in einfacher Weise die Möglichkeit geschaffen wird, vollautomatisch die gewünschte Bodenfeuchtigkeit sicherzustellen, ohne daß es hiebei zu einer Übersättigung der Luft oberhalb des Substrates an Feuchtigkeit kommt. Die klimatischen Bedingungen innerhalb des Pflanzsubstrates können hiebei unabhängig von den klimatischen Bedingungen für den oberirdischen Teil der Pflanze eingestellt werden, und es lassen sich auf diese Weise die klimatischen Bedingungen für das Wachstum und die Ausbildung der Pflanze optimieren.

Auch bei Pflanzen, welche ohne Töpfe oder Container kultiviert werden, läßt sich die erfindungsgemäße Einrichtung einsetzen, wobei mit Vorteil die Ausbildung so getroffen ist, daß eine Mehrzahl von in Richtung der Oberfläche formschlüssig aneinandergereihten, bepflanzten Substratballen, insbesondere Torfballen, vorgesehen ist, deren Unterfläche mit dem Gasverteilungsraum in Verbindung steht. Analog kann naturgemäß bei Topfausbildungen vorgegangen werden, bei welchen das Material des Topfes aus gepreßtem Torf od.dgl. besteht. Derartige Töpfe sind in konventioneller Topfform oder auch als Strangtöpfe einsetzbar, wobei im besonderen Strangtöpfe nach Beendigung der Kultivierphase in einfacher Weise in von den jeweiligen Pflanzen benötigte Bereiche an Pflanzsubstrat getrennt werden können.

Im Falle der Verwendung von hinreichend formstabilen Töpfen oder Containern kann der Gasverteilungsraum eine Lochwand aufweisen, welche den Gasverteilungsraum nach oben begrenzt und daß in die Löcher der Lochwand Töpfe oder Container dichtend eingesetzt sind. Eine derartige, im wesentlichen gasdichte Lochwand kann gleichfalls aus gepreßtem Torf oder ähnlichem Material durch Ausstanzen der Löcher hergestellt werden, und es ist bei einer derartigen Ausbildung leicht möglich, einzelne Pflanzen, deren Entwicklungsstadium bereits hinreichend fortgeschritten ist, aus dem Verbund zu entnehmen und analog geformte Töpfe in das bleibende Loch einzusetzen. Die Lochwand muß hiebei bevorzugt so ausgebildet sein, daß ihr Durchtrittswiderstand für die Zuluft größer ist als der Durchtrittswiderstand des in die Löcher eingesetzten Pflanzsubstrates samt den Behältnissen, wie Containern bzw. Töpfen. Mit Vorteil kann eine Lochplatte zum Einsatz gelangen, welche in der Folge als Transportpalette Verwendung finden kann.

Eine besonders einfache Ausbildung für den raschen Austausch einzelner Pflanzen wird dadurch erzielt, daß die Töpfe, Container oder Kompartimente an der Unterseite ein Anschlußprofil aufweisen, welches mit einem Gasauslaßöffnungen des Gasverteilungsraumes umgebenden Anschlußprofil des Gasverteilungsraumes dichtend verbindbar ist. Derartige Töpfe oder Container müssen naturgemäß im Bereich ihrer Anschlußprofile entsprechend porös bzw. gasdurchlässig ausgebildet sein, um sicherzustellen, daß die feuchte Zuluft tatsächlich ihren Weg durch das Pflanzsubstrat nimmt. Dadurch, daß die entsprechenden Dichtprofile bzw. Anschlußprofile unmittelbar zusammenwirken, wird ein Austritt von feuchter Luft zwischen den Töpfen oder Containern verhindert.

Prinzipiell können mit der erfindungsgemäßen Einrichtung bereits dann optimale Verhältnisse erzielt werden, wenn die entsprechend temperierte Zuluft über eine konventionelle Befeuchtungseinrichtung geführt wird, in welcher weitgehende Sättigung des Gases mit Feuchtigkeit erfolgt. Derartige Befeuchtungseinrichtungen können von berieselten Matten oder Steinen gebildet werden, über welche das zuzuführende Gas geführt wird, bevor es in den Gasverteilungsraum eingeleitet wird. Eine den jeweiligen Pflanzen noch weiterreichend anpaßbare Regelung läßt sich aber dadurch erzielen, daß in die Gaszuleitung zum Verteiler Einrichtungen zum Messen und Regeln der Gaszusammensetzung, Feuchte und Temperatur eingeschaltet sind und daß die Gaszufuhr zum Gasverteilungsraum in Abhängigkeit von den Meßwerten der Temperatur- und/oder Feuchtigkeitsfühler geregelt wird. Insbesondere in Fällen, in welchen die Zuluft mit Feuchtigkeit nahezu gesättigt ist, ist es besonders vorteilhaft, wenn an die Gasversorgung und -verteilung ein System zum Abscheiden, Sammeln und Ableiten von Kondensaten angeschlossen ist, wobei das abgeleitete Kondensat einem Kondensatpuffer zugeführt werden kann und als Nutzwasser, beispielsweise Gießwasser, wiederum zur Verfügung steht. Auf Grund des Umstandes, daß das benötigte Wasser dampfförmig mit dem Gas eingetragen wird, sind Verkalkungserscheinungen ausgeschlossen und auch das abgeleitete Kondensat stellt gegenüber üblichem Frischwasser ein für das Kultivieren von Pflanzen günstigeres Gießwasser dar. Prinzipiell können dem Gasstrom auch leicht flüchtige Düngemittel zugesetzt werden. Düngemittel können aber ohne weiteres auch in Kondensatwasser gelöst zum Einsatz gelangen. Mit Vorteil ist in die Gaszuleitung eine Einrichtung zum Einspeisen von wachstumsregulierenden Hilfsstoffen bzw. Nährstoffen als Gasphase oder feindisperse Phase eingeschaltet, wobei eine große Anzahl von leicht flüchtigen wachstumsregulierenden Hilfsstoffen zum Einsatz gelangen kann. Auch hier kann ebenso wie bei der gewünschten Befeuchtung eine weitestgehend vollautomatische Betriebsweise sichergestellt werden, welche ein Minimum an Wartung und Kontrolle erfordert. In vorteilhafter Weise ist an die Verteiler bzw. an die Zuleitung zum Gasverteilungsraum eine Spülleitung anschließbar.

Eine weitere Maßnahme zur besseren Regelbarkeit der klimatischen Bedingungen kann dadurch geboten werden, daß in die Gaszuleitung ein regelbares Drosselventil bzw. Absperrventil eingesetzt ist. Ein derartiges regelbares Absperrventil kann insbesondere für die intermittierende Beaufschlagung vorteilhaft sein, und es hat sich gezeigt, daß das Pflanzenwachstum durch intermittierende Feuchtigkeits- und Temperaturzufuhr wesentlich stimuliert werden kann. Eine intermittierende Zufuhr von feuchten, warmen Gasen durch das Pflanzsubstrat hindurch ergibt Wachstumsschübe, welche insgesamt zu einem rascheren Wachstum bei gleichzeitiger Verbesserung der Ausbildung führen kann. Die erfindungsgemäße Einrichtung stellt in jedem Falle sicher, daß das gesamte zum Einsatz gelangende feuchte Gas tatsächlich durch das Pflanzsubstrat und nicht unmittelbar in die Atmosphäre austritt. Aus diesem Grunde eignet sich die erfindungsgemäße Einrichtung auch, wie es der bevorzugten Verwendung der erfindungsgemäßen Einrichtung entspricht, für das Reinigen und Desodorieren von Abluft und/oder Abgasen, wobei insbesondere Rauchgas, Rotteabluft und andere Gasmischungen nach entsprechender Befeuchtung und Temperatureinstellung zum Einsatz gelangen können. Das jeweils zum Einsatz gelangende Gas kann über ein Gebläse in den Gasverteilungsraum eingespeist werden, und es kann intermittierend Frischluft und Rotteabluft bzw. intermittierend Gas unterschiedlicher Zusammensetzung zur Erzielung besonders günstiger Wachstumsbedingungen eingesetzt werden.

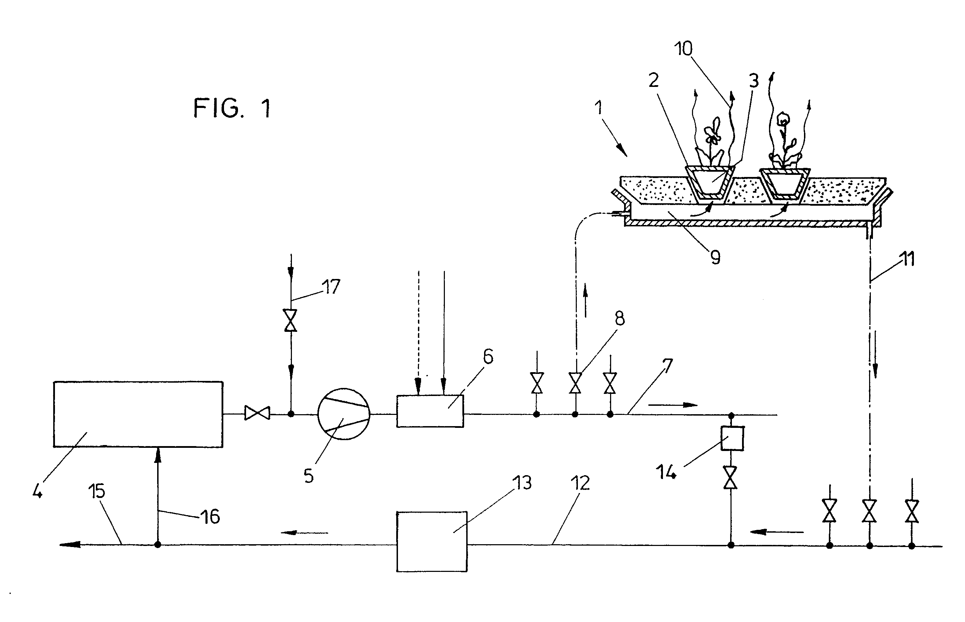

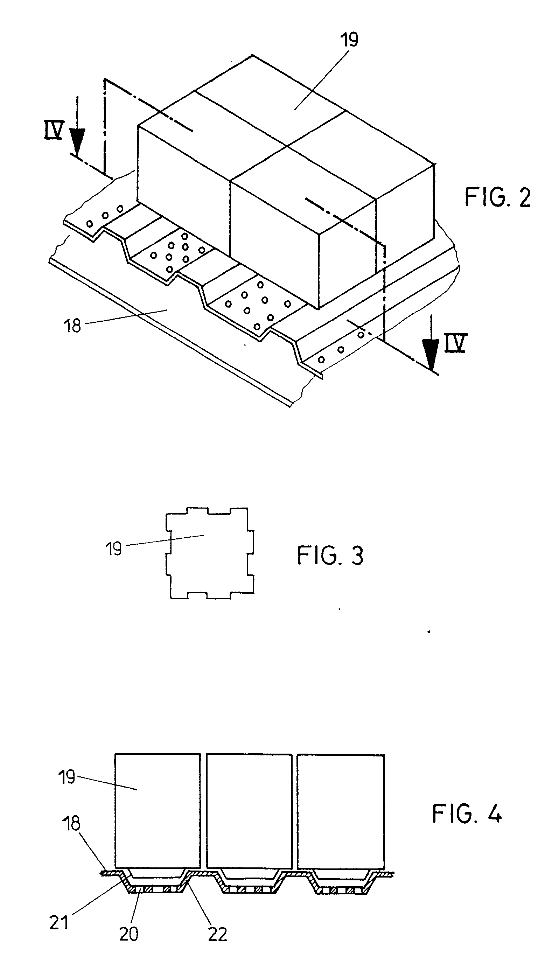

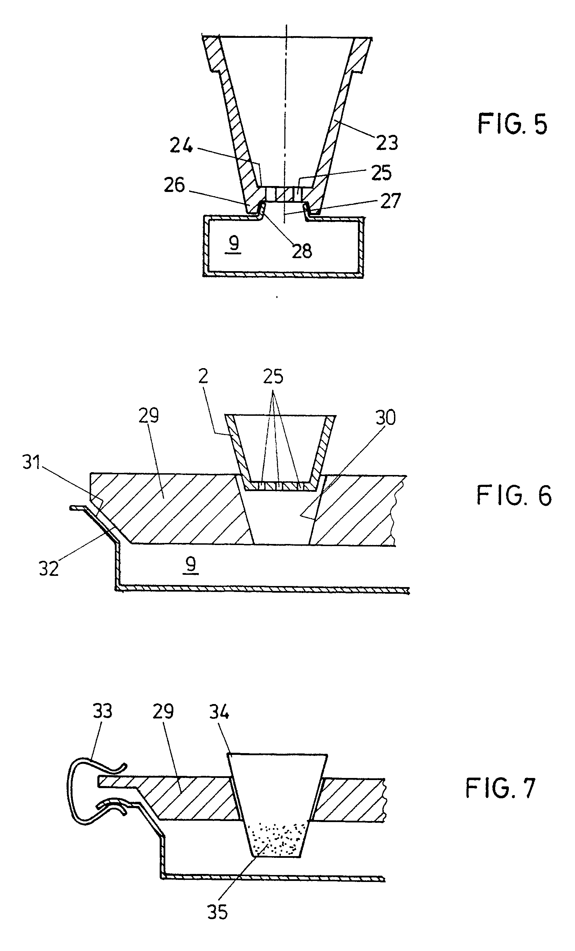

Die Erfindung wird nachfolgend an Hand von in der Zeichnung schematisch dargestellten Ausführungsbeispielen näher erläutert. In dieser zeigen: Fig. 1 eine schematische Übersicht über eine erfindungsgemäße Einrichtung; Fig. 2 eine perspektivische Ansicht eines Gasverteilungsraumes mit von Torfballen gebildeten Substratballen; Fig. 3 einen geeigneten Grundriß eines Torfballens für die Verwendung im Zusammenhang mit einer Einrichtung nach Fig. 2; Fig. 4 einen Schnitt nach der Linie IV-IV der Fig. 2; Fig. 5 eine spezielle Ausbildung eines Topfes für den Anschluß an einen Gasverteilungsraumes; Fig. 6 einen Längsschnitt durch eine erfindungsgemäße Einrichtung mit einer Lochplatte als Deckplatte, und Fig. 7 eine analoge Darstellung wie Fig. 6 mit in ein Loch der Deckplatte nach Fig. 6 eingesetztem Topf und einem seitlichen Dichtprofil.

In Fig. 1 ist eine erfindungsgemäße Einrichtung zum Kultivieren von Pflanzen schematisch mit 1 angedeutet. Die zur Befeuchtung und Belüftung des in Töpfen 2 enthaltenen Pflanzsubstrates 3 benötigten Gase werden einem Rohgaserzeuger 4 entnommen und über ein Gebläse 5 einer Befeuchtungsstufe 6 zugeführt. In der Befeuchtungsstufe 6 erfolgt eine Temperatur- und Feuchtigkeitskontrolle, um die gewünschte Befeuchtung einstellen zu können. In üblicher Weise genügt hier jedoch eine Befeuchtung durch mit Wasser angeströmte Filtermatten oder Rieselsteine. In der Befeuchtungsstufe 6 kann auch über entsprechende Wärmetauscher die gewünschte Temperatur nochmals eingestellt werden, sofern Rohgas mit der gewünschten Temperatur nicht unmittelbar zur Verfügung gestellt wird. Über ein Rohrsystem 7 und regelbare Einstell-bzw. Drosselventile 8 erfolgt die Gasanspeisung an den Gasverteilungsraum 9 der Einrichtung zum Kultivieren von Pflanzen, wobei das in den Gasverteilungsraum 9 eingespeiste Gas über den Boden der Töpfe 2 und durch das Pflanzsubstrat 3 in Richtung der Pfeile 10 ausgepreßt wird. Auf Grund der gewählten Temperatur und Feuchtigkeit erfolgt unmittelbar die geeignete Einstellung der für das Wachstum gewünschten Temperaturen, wobei im Gegensatz zu einer Bewässerung die Luftdurchlässigkeit und damit die Atmungsfähigkeit im Inneren des Substrates aufrechterhalten bleibt. Über eine schematisch mit 11 angedeutete Leitung kann Kondensat abgeleitet werden, welches einer Kondensatsammelleitung 12 zugeführt wird und einem Kondensatpuffer 13 zugeleitet werden kann. Auch aus dem Rohrleitungssystem 7 kann über eine Kondensatabscheideeinrichtung 14 Kondensat abgeleitet werden und in die Kondensatsammelleitung 12 eingespeist werden. Das im Kondensatpuffer 13 gesammelte Kondensat kann über die Leitung 15 als Nutzwasser, beispielsweise Gießwasser, abgezogen werden und über eine Leitung 16 dem Rohgaserzeuger zur Rohluftbefeuchtung zugeführt werden.

Neben der Möglichkeit, Rohgas mit bestimmter Temeratur und bestimmter Feuchtigkeit im Rohgaserzeuger 4 herzustellen, besteht die Möglichkeit, über eine Zweigleitung 17 eine Frischluftspülung vorzunehmen. Ebenso kann über diese Zweigleitung 17 Rauchgas oder Rotteabluft eingespeist werden, sofern diese nicht unmittelbar dem Rohgaserzeuger zugeführt werden.

In Fig. 2 ist eine alternative Ausbildung des Gasverteilungsraumes zu ersehen. Der Gasverteilungsraum wird von einer Lochplatte 18 begrenzt, auf welche unter gegenseitigem Formschluß Torfballen 19 angeordnet sind. Um ein Austreten von befeuchteter Luft über den Zwischenraum zwischen benachbarten Torfballen 19 zu verhindern, kann der Formschluß, wie beispielsweise in Fig. 3 dargestellt, eine Art Verzahnung aufweisen, deren Symmetrie so gehalten ist, daß in jeder Drehlage des Würfels 19 ein sicherer und weitgehend gasdichter Kontakt zu den benachbarten Torfwürfeln bzw. Torf ballen 19 gewährleistet ist. Die Art der Anordnung der Torfballen bzw. Substratballen 19 nebeneinander ist auch der Fig. 4 zu entnehmen, wobei in Fig. 4 zusätzlich ersichtlich ist, daß die Abdichtung der einzelnen Torfballen an ihren Seitenflächen dann nicht kritisch ist, wenn eine entsprechende Einleitung der feuchten Gase über die untere Stirnfläche der Torfballen sichergestellt ist. Dies wird bei der Ausbildung nach Fig. 4 dadurch erzielt, daß die Lochplatte 18 lediglich in denjenigen Bereichen Löcher 20 aufweist, auf welchen eine untere Stirnfläche der Torfballen 19 aufliegt, wobei die Zentrierung der Torfballen 19 durch entsprechende konische Ansätze 21, welche mit schrägen Seitenkanten 22 der Lochplatte 18 zusammenwirken, erfolgen kann.

Eine weitere Möglichkeit eines weitgehend dichten Anschlusses eines Pflanzgefäßes an einen Gasverteilungsraum ist in Fig. 6 dargestellt. In Fig. 5 ist ein Topf 23 ersichtlich, dessen Bodenfläche 24 Löcher 25 und nach unten vorragende Ansätze 26 aufweist, welche wiederum nach oben ragende, die Belüftungsöffnungen 27 des Gasverteilungsraumes 9 begrenzende Flanken 28 übergreift. Auf diese Weise wird ein weitgehend gasdichter Anschluß der Töpfe 23 an den Gasverteilungsraum 9 sichergestellt.

Bei der Ausbildung nach Fig. 6 wird eine Deckplatte 29 als obere, den Gasverteilungsraum Wand eingesetzt, wobei diese Deckplatte 29 als Lochplatte ausgebildet ist. Die Löcher der Lochplatte sind mit 30 bezeichnet und erlauben die Aufnahme von der Innenkontur der Löcher 30 entsprechenden Töpfen 2. Die entsprechende Gasdurchlässigkeit an der dem Gasverteilungsraum zugewandten Seite der Töpfe 2 wird wiederum durch schematisch mit 25 angedeutete Löcher im Boden der Töpfe 2 sichergestellt. Um ein Entweichen von befeuchtetem Gas an Stellen zu vermeiden, an welchen sich kein Pflanzsubstrat befindet, muß die Deckplatte 29 eine entsprechend höhere Dichtheit aufweisen als das Pflanzsubstrat, so daß das Gas tatsächlich seinen Weg durch das Pflanzsubstrat nimmt. Um diese Dichtheit auch an den Rändern zu gewährleisten, kann das Gehäuse des Gasverteilungsraum 9 entsprechende Schrägflächen 31 aufweisen, welche mit abgeschrägten Flächen 32 am Rande der Deckplatten 29 dichtend zusammenwirken. Alternativ kann, wie in Fig. 7 dargestellt, der seitliche Rand noch zusätzlich durch Klammerprofile 33 gegen Austritt von Gas gesichert werden, wobei in Fig. 7 ein Pflanzencontainer 34 zum Einsatz gelangt, welcher anstelle der Löcher im Boden des Topfes eine poröse Wand und eine poröse Bodenfläche aufweist, wobei die porösen Wandflächen schematisch mit 35 angedeutet sind. In den Fällen der Ausbildung nach Fig. 6 oder 7 kann die Deckplatte bzw. Lochplatte 29 unmittelbar als Palette zum Transport der Pflanzen Verwendung finden.

Auf Grund des dichten Abschlusses des Gasverteilungsraumes läßt sich die erfindungsgemäße Einrichtung auch als Gasreinigung oder Desodorierung für Abluft, insbesondere Rotteabluft, heranziehen, wobei im Falle der Verwendung von Rotteabluft eine Reihe von geruchsintensiven aber für Pflanzen durchaus nahrhaften Nährstoffen biologisch abgebaut werden können.

Die Gasverteilungsräume können analog wie bei konventioneller Tischkultur nach Art von Tassen ausgebildet werden, so daß nach Abnahme von Deckplatten, wie sie beispielsweise in den Fig. 6 und 7 dargestellt sind, mit der gleichen Einrichtung eine konventionelle Tassenkultur bzw. Tischkultur ohne Begasung vorgenommen werden kann, wobei die Bewässerung in konventioneller Weise als Tassenbewässerung betrieben werden kann.

Die Gaszuführung zu den Gasverteilungsräumen kann in beliebiger Weise sowohl über fest installierte Rohre als auch über flexible und abkoppelbare Schläuche vorgenommen werden, wobei das Rohgas auch durch Mischen von gasförmigen Kohlen stoff- und Nährstoffträgern, wie beispielsweise $CO_2$, Ammoniak od.dgl., hergestellt werden kann.

Die Möglichkeit, das Begasungssystem mit Vorrichtungen zur Spülung mit Frischluft auszustatten, stellt eine sicherheitstechische Maßnahme dar, welche insbesondere vor dem Austausch einer größeren Anzahl von zu kultivierenden Pflanzen vorteilhaft erscheint. Die zentrale Sammlung von Kondensat und Sickerwasser bietet hiebei gleichzeitig die Möglichkeit der Verwendung dieses Wassers im Rahmen der erfindungsgemäßen Einrichtung zum Kultivieren von Pflanzen.

**Ansprüche**

1. Einrichtung zum Kultivieren von Pflanzen (1) mit einem Gasverteilungsraum (9), an welchen wenigstens eine Leitung für, insbesondere befeuchtete, Zuluft angeschlossen ist, dadurch gekennzeichnet, daß das Pflanzsubstrat (3) zumindest an seiner Unterseite an den Gasverteilungsraum (9) angeschlossen ist.

2. Einrichtung nach Anspruch 1, dadurch gekennzeichnet, daß das Pflanzsubstrat (3) in Töpfen (2,23), Containern (34) oder Kompartimenten, wie z.B. Ballen, enthalten ist, deren Böden sowie gegebenenfalls Teile der Topfwände gasdurchlässig ausgebildet sind und an den Gasverteilungsraum angeschlossen sind und daß zumindest die Oberkanten der Pflanzentöpfe (2) bzw. Kompartimente dichtend miteinander verbunden sind.

3. Einrichtung nach Anspruch 1 oder 2, dadurch gekennzeichnet, daß eine Mehrzahl von in Richtung der Oberfläche formschlüssig aneinandergereihten, bepflanzten Substratballen (19), insbesondere Torfballen, vorgesehen ist, deren Unterfläche mit dem Gasverteilungsraum (9) in Verbindung steht.

4. Einrichtung nach Anspruch 1, 2 oder 3, dadurch gekennzeichnet, daß der Gasverteilungsraum (9) eine Lochwand (18) aufweist, welche den Gasverteilungsraum (9) nach oben begrenzt und daß in die Löcher (20,27) der Lochwand (18) Töpfe oder Container (34) dichtend eingesetzt sind.

5. Einrichtung nach einem der Ansprüche 1 bis 4, dadurch gekennzeichnet, daß die Töpfe (2,23), Container (34) oder Kompartimente an der Unterseite ein Anschlußprofil (26) aufweisen, welches mit einem Gasauslaßöffnungen (27) des Gasverteilungsraumes (9) umgebenden Anschlußprofil (28) des Gasverteilungsraumes (9) dichtend verbindbar ist.

6. Einrichtung nach einem der Ansprüche 1 bis 5, dadurch gekennzeichnet, daß in die Gaszuleitung zum Verteiler Einrichtungen zum Messen und Regeln der Gaszusammensetzung, Feuchte und Temperatur eingeschaltet șind und daß die Gaszufuhr zum Gasverteilungsraum (9) in Abhängigkeit von den Meßwerten der Temperatur- und/oder Feuchtigkeitsfühler geregelt wird.

7. Einrichtung nach einem der Ansprüche 1 bis 6, dadurch gekennzeichnet, daß an die Gasversorgung und -verteilung ein System zum Abscheiden, Sammeln und Ableiten von Kondensaten (11,12,13,14) angeschlossen ist.

8. Einrichtung nach einem der Ansprüche 1 bis 7, dadurch gekennzeichnet, daß in die Gaszuleitung ein regelbares Drosselventil bzw. Absperrventil (8) eingesetzt ist.

9. Einrichtung nach einem der Ansprüche 1 bis 8, dadurch gekennzeichnet, daß in die Gaszuleitung eine Einrichtung zum Einspeisen von wachstumsregulierenden Hilfsstoffen bzw. Nährstoffen als Gasphase oder feindisperse Phase eingeschaltet ist.

10. Einrichtung nach einem der Ansprüche 1 bis 9, dadurch gekennzeichnet, daß an den Verteiler bzw. an die Zuleitung zum Gasverteilungsraum (9) eine Spülleitung anschließbar ist.

11. Verwendung der Einrichtung nach einem der Ansprüche 1 bis 9 zum Behandeln, Reinigen und Desodorieren von Abluft und/oder Abgasen.

FIG. 1

EP 0 398 868 A1

FIG. 2

19

18

IV

IV

FIG. 3

19

FIG. 4

19

18

21

20

22

FIG. 5

FIG. 6

FIG. 7

Europäisches Patentamt

**EUROPÄISCHER RECHERCHENBERICHT**

Nummer der Anmeldung

EP 90 89 0156

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C- 677 358 (G. BARTHEL)<br>* Seite 2, Zeilen 28-88; Abbildungen 1-4 * | 1,8,9 | A 01 G 9/24 |
| A | | 2-4 | |
| | --- | | |
| Y | US-A-3 274 730 (R.N. BOSE)<br>* Spalte 1, Zeile 37 - Spalte 2, Zeile 52; Abbildungen 1-5 * | 1,8,9 | |
| A | | 6 | |
| | ----- | | |

| | |
|---|---|
| | RECHERCHIERTE SACHGEBIETE (Int. Cl.5) |
| | A 01 G |

Der vorliegende Recherchenbericht wurde für alle Patentansprüche erstellt

| Recherchenort | Abschlußdatum der Recherche | Prüfer |
|---|---|---|
| BERLIN | 20-07-1990 | MARTIN DEL RIO A |